(19) **Europäisches Patentamt / European Patent Office / Office européen des brevets**

(11) **EP 3 521 089 B1**

(12) **EUROPEAN PATENT SPECIFICATION**

(45) Date of publication and mention of the grant of the patent:
**09.12.2020 Bulletin 2020/50**

(21) Application number: **17856568.5**

(22) Date of filing: **14.08.2017**

(51) Int Cl.:
**B60K 7/00** *(2006.01)* **B60L 15/20** *(2006.01)*
**F16H 19/04** *(2006.01)* **F16D 41/06** *(2006.01)*
**B60K 6/383** *(2007.10)* **B60K 17/35** *(2006.01)*
**F16D 25/10** *(2006.01)* **F16H 3/10** *(2006.01)*
**B60L 15/40** *(2006.01)* **B60K 1/00** *(2006.01)*

(86) International application number:
**PCT/KR2017/008820**

(87) International publication number:
**WO 2018/062682 (05.04.2018 Gazette 2018/14)**

(54) **RACE CAR FOR PERFORMING NON-POWERED DRIVING BY USING GRAVITY AND MOMENTARY ACCELERATION BY USING POWER UNIT**

RENNWAGEN ZUR DURCHFÜHRUNG VON NICHT ANGETRIEBENEM FAHREN MITTELS SCHWERKRAFT UND MOMENTANBESCHLEUNIGUNG MITTELS EINER ANTRIEBSEINHEIT

VOITURE DE COURSE POUR EFFECTUER UNE CONDUITE NON ALIMENTÉE EN UTILISANT LA GRAVITÉ ET L'ACCÉLÉRATION MOMENTANÉE AU MOYEN D'UNE UNITÉ D'ALIMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2016 KR 20160123732**

(43) Date of publication of application:
**07.08.2019 Bulletin 2019/32**

(73) Proprietor: **Monolith Inc.**
**Jeju-si, Jeju-do 63309 (KR)**

(72) Inventors:
- **CHOI, Ji Woong**
  **Seoul 05703 (KR)**
- **KIM, Jong Seok**
  **Jeju-si**
  **Jeju-do 63082 (KR)**
- **JUNG, Jae Woong**
  **Ansan-si**
  **Gyeonggi-do 15399 (KR)**

(74) Representative: **M. Zardi & Co S.A.**
**Via G. B. Pioda, 6**
**6900 Lugano (CH)**

(56) References cited:

JP-A- 2008 089 075   JP-A- 2010 280 295
JP-A- 2014 014 261   KR-A- 20020 013 365
KR-B1- 101 043 386   US-A1- 2010 018 786

- CAMILLERI R ET AL: "The value of a clutch mechanism in electric vehicles", 2013 WORLD ELECTRIC VEHICLE SYMPOSIUM AND EXHIBITION (EVS27), IEEE, 17 November 2013 (2013-11-17), pages 1-11, XP032654384, DOI: 10.1109/EVS.2013.6915014 [retrieved on 2014-10-01]
- Espeland Aslak Brage ET AL: "Development and Construction of Vehicle for Participation in the Shell Eco-marathon Competition", , 8 November 2012 (2012-11-08), pages 283-287, XP055684478, Retrieved from the Internet: URL:https://pdfs.semanticscholar.org/bdd2/ 42ef86d84b548429f267416c9a8a407156a4.pdf [retrieved on 2020-04-08]
- CALDERON ALFONSO GAGO ET AL: "GPRS telemetry system for high-efficiency electric competition vehicles", 2013 WORLD ELECTRIC VEHICLE SYMPOSIUM AND EXHIBITION (EVS27), IEEE, 17 November 2013 (2013-11-17), pages 1-7, XP032654064, DOI: 10.1109/EVS.2013.6914788 [retrieved on 2014-10-01]

EP 3 521 089 B1

## Description

Field of the Invention

Embodiments provide a race car for performing non-powered driving by using gravity and momentary acceleration by using a power unit.

Background of the Invention

Embodiments described herein relate to a race car. More particularly, the inventive concept relates to a race car for performing non-powered driving by using gravity and momentary acceleration by using a power unit.

In racing games, various items are present. For example, a driving speed of a vehicle may be momentarily increased by using a momentary acceleration item. A detailed method capable of allowing a user to maintain an interest in racing and additionally deriving a new challenge by applying it to a race car has been required. In a detailed methodology for driving it, a differential gear may be used.

The differential gear is also called a differential gear device, and is used to drive a rear axle of a vehicle. When two gears are engaged with each other to be rotated such that one gear shaft is rotated while another gear shaft is taken as the center, the combination of the gears is called a planetary gear device. The gear at the center is called a sun gear, and planetary gears revolve round the sun gear. That is, the revolution gears are called planetary gears. If kinetic energy is applied to any two of a sun gear shaft, planetary gear shafts, and links connecting them, the remaining one(s) rotates while receiving the motions of the two. The gear device is called a differential gear device. However, because the differential gear device is bulky and heavy, development of a compact device that may replace it has been required. US 2010/018786 A discloses a vehicle having a motor and axles which are selectively rotatable by the motor, a reduction gear set, a differential transferring torque from the motor to the axles, and selectable one-way clutch (SOWC) assemblies. CAMILLERI R ET AL, "The value of a clutch mechanism in electric vehicles", 2013 WORLD ELECTRIC VEHICLE SYMPOSIUM AND EXHIBITION (EVS27), IEEE, (20131117) discloses the clutch mechanisms of the EV of state of the art. Espeland Aslak Brage ET AL: "Development and Construction of Vehicle for Participation in the Shell Eco-marathon Competition", 8 November 2012 (2012-11-08), pages 283-287, XP055684478, Retrieved from the Internet: RL:https://pdfs.semanticscholar.org/bdd2/42ef86d84b548429f267416c9a8a407156a4.pdf and CALDERON ALFONSO GAGO ET AL: "GPRS telemetry system for high-efficiency electric competition vehicles", 2013 WORLD ELECTRIC VEHICLE SYMPOSIUM AND D4 EXHIBITION (EVS27), IEEE, 17 November 2013 (2013-11-17), 5 pages1-7,XP032654064, DOI: 10.1109/EVS.2013.6914788 [retrieved on 2014-10-01] disclose energy saving technologies for vehicle.

Summary of the Invention

The technical objects of the inventive concept are not limited to the above-mentioned ones, and the other unmentioned technical objects will become apparent to those skilled in the art from the following description.

In accordance with an aspect there is provided a system comprising: a race car adapted to perform non-powered driving by using gravity and momentary acceleration by using a power unit; and a server, wherein the race car comprise: a first power device configured to supply power to the race car when the race car is momentarily accelerated; two one-way clutches connected to the first power device; and two wheels connected to the two one-way clutches, respectively, wherein the two wheels may rotate at different speeds and are supplied with power supplied from the first power device through the one-way clutches connected to the two wheels, respectively, when the race car is momentarily accelerated, and characterized in that the race car further comprises: a communication unit configured to transmit driving information of the race car to the server, and receives a control signal of the first power device for momentary acceleration from the server when the driving information of the race car satisfies a specific condition; and a control unit configured to control the first power device based on the control signal received by the communication unit, wherein the control signal is configured to control the first power device such that the race car travels at a preset speed for a preset period of time, wherein the specific condition is at least one of a travel distance and a travel period of time of the race car and a location of the race car, and wherein the racing car is adapted to perform momentary acceleration under the control of the server, and wherein the server is adapted to communicate with another racing car.

The first power device may include an electric motor configured to supply power, a pinion gear connected to the electric motor, and a spur gear engaged with the pinion gear, the race car may further include two rotary shafts connecting the centers of the two wheels and the center of the spur gear, and the two one-way clutches may be installed between the center of the spur gear and the two rotary shafts, respectively.

Each of the two one-way clutches may include an inner race connected to the corresponding rotary shaft, an outer race connected to the spur gear, and at least one roller installed between the inner race and the outer race and configured to restrict the rotary shaft such that the rotary shaft rotates only in a progress direction of the race car, and friction due to the roller may occur between the outer race and the inner race so that the inner race rotates at a speed that is the same as that of the outer race when the electric motor is driven such that the outer race rotates at a speed that is the same as or higher than that of the inner race in a rotational direction that is the same as that of the inner race.

The first power device may include at least one encoder configured to measure an RPM of at least one of the two wheels, and a control unit configured to control the electric motor, and the control unit may calculate a speed of the race car by using the diameters of the two wheels and the RPM measured by the encoder, and may control the electric motor such that an additional speed is added to the calculated speed when the race car is momentarily accelerated.

The race car may further include a communication unit configured to transmit driving information of the race car to a server, and receives a control signal of the first power device for momentary acceleration from the server when the driving information of the race car satisfies a specific condition, and a control unit configured to control the first power device based on the control signal received by the communication unit, and the control signal may be configured to control the first power device such that the race car travels at a preset speed for a preset period of time.

The specific condition may be at least one of a travel distance and a travel period of time of the race car and a location of the race car.

The race car may further include at least one of a propeller, a blade, a jet engine, and a ducted fan for obtaining an additional acceleration when the race car is momentarily accelerated.

The race car may further include two second power devices connected to the two wheels, respectively, and the two second power devices may supply different power to the two wheels, respectively, when the race car is momentarily accelerated.

The race car may further include a button configured to indicate performance of the momentary acceleration, and a control unit configured to perform the momentary acceleration by controlling the first power device if receiving an input of the button.

The number of time, by which the momentary acceleration is performed, may be restricted to a specific reference value or less by using the input of the button.

Detailed items of the other embodiments are included in the detailed description and the accompanying drawings.

Brief Description of Drawings

The above and other objects and features will become apparent from the following description with reference to the following figures, wherein like reference numerals refer to like parts throughout the various figures unless otherwise specified, and wherein:

FIG. 1 is a view illustrating a race car according to an example useful for understanding the invention;
FIG. 2 is a view illustrating a first power device of a race car according to an example useful for understanding the invention;
FIG. 3 is a view illustrating a one-way clutch according to an example useful for understanding the invention;
FIG. 4 is a view illustrating a third power device according to an example useful for understanding the invention; and
FIG. 5 is a block diagram illustrating a configuration of a race car according to an embodiment.

Detailed Description of Embodiments

The above and other aspects, features and advantages of the invention will become apparent from the following description of the following embodiments given in conjunction with the accompanying drawings. However, the inventive concept is not limited to the embodiments disclosed below, but may be implemented in various forms. The embodiments of the inventive concept is provided to make the disclosure of the inventive concept complete and fully inform those skilled in the art to which the inventive concept pertains of the scope of the claims.

The terms used herein are provided to describe the embodiments but not to limit the inventive concept. In the specification, the singular forms include plural forms unless particularly mentioned. The terms "comprises" and/or "comprising" used herein does not exclude presence or addition of one or more other elements, in addition to the aforementioned elements. Throughout the specification, the same reference numerals dente the same elements, and "and/or" includes the respective elements and all combinations of the elements. Although "first", "second" and the like are used to describe various elements, the elements are not limited by the terms. The terms are used simply to distinguish one element from other elements. Accordingly, it is apparent that a first element mentioned in the following may be a second element without departing from the spirit of the inventive concept.

Unless otherwise defined, all terms (including technical and scientific terms) used herein have the same meaning as commonly understood by those skilled in the art to which the inventive concept pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

Hereinafter, exemplary embodiments will be described in detail with reference to the accompanying drawings.

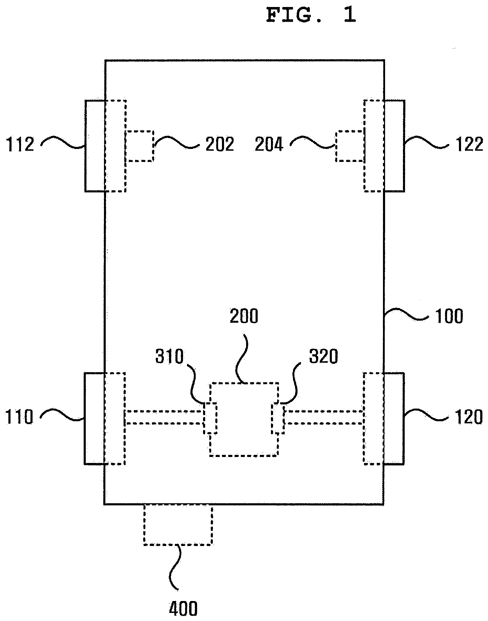

FIG. 1 is a view illustrating a race car according to an example useful for understanding the invention.

In the race car 100 illustrated in FIG. 1, only components related to embodiments are illustrated. Accordingly, it will be understood by an ordinary skilled in the art to which the inventive concept pertains that other general-purpose components may be further included in the race car 100, in addition to the components illustrated in FIG. 1.

The race car 100 of FIG. 1 is illustrated for exemplary illustration, and the external shape of the race car 100 and the number of wheels are not limited to the external shape of the race car 100 and the number of the wheels illustrated in FIG. 1.

The race car 100 performs non-powered driving by using gravity in a course including a downhill road.

In an embodiment, the race car 100 performs momentary acceleration. The race car 100 includes a first power device 200 configured to supply power to the race car 100 when the race car 100 is momentarily accelerated. The race car 100 includes two one-way clutches 310 and 320 connected to the first power device 200, and the two wheels 110 and 120 are connected to the two one-way clutches 310 and 320, respectively.

In an embodiment, the two wheels 110 and 120 are rear wheels. In another embodiment, the two wheels 110 and 120 are front wheels. In another embodiment, the race car 100 may include only two wheels 110 and 120, or may include three wheels including the two wheels 110 and 120.

In an embodiment, separate second power devices 202 and 204 are provided in two wheels 112 and 1122 of the race car 100, respectively. The second power devices 202 and 204 may be electric motors. The race car 100 may perform momentary acceleration by using the second power devices 202 and 204. The two wheels 112 and 122 and the second power devices 202 and 204 may be operated independently. Accordingly, the second power devices 202 and 204 may have different outputs, and the two wheels 112 and 122 may rotate at different speeds.

In an embodiment, the race car 100 includes a third power device 400 configured to additionally supply power to the race car 100 when the race car 100 is momentarily accelerated. The third power device 400 includes at least one of a propeller, a blade, a jet engine, and a ducted fan. The kind of the third power device 400 for supplying additional power to the race car 100 is not limited.

In an embodiment, the race car 100 includes a steering wheel and a brake. The race car 100 includes a steering device configured to control a travel direction of the race car 100 as the driver manipulates the steering wheel, and a deceleration device configured to decrease a travel speed of the race car 100 as the driver manipulates the brake.

In an embodiment, the deceleration device may be always controlled according to manipulation by the driver and decrease the travel speed of the race car 100.

The first power device 200, the second power devices 202 and 204, and the third power device 400 are used to perform momentary acceleration.

In an embodiment, the first power device 200, the second power devices 202 and 204, and the third power device 400 may be used only to perform momentary acceleration. The race car 100 does not directly include an acceleration pedal capable of controlling the first power device 200, the second power devices 202 and 204, and the third power device 400.

In an embodiment, after a race is finished, the first power device 200, the second power devices 202 and 204, and the third power device 400 may be used to move the race car 100 to a specific location. For example, the first power device 200, the second power devices 202 and 204, and the third power device 400 may be used to move the race car 100 to a start point of a track after the race car 100 finishes a travel of the track.

In an embodiment, the race car 100 includes a communication unit configured to receive a control signal for the first power device 200, the second power devices 202 and 204, and the third power device 400 from the outside. Further, the race car 100 includes a control unit configured to control the first power device 200, the second power devices 202 and 204, and the third power device 400 based on a signal received from the outside. In an embodiment, the first power device 200, the second power devices 202 and 204, and the third power device 400 may be used to move the race car 100 to a start point of the rack based on a control signal received from the outside after the race car 100 finishes the travel of the track.

In an embodiment, the first power device 200, the second power devices 202 and 204, and the third power device 400 are not controlled through manipulation by the driver. In an embodiment, the first power device 200, the second power devices 202 and 204, and the third power device 400 are controlled by an external signal that is irrelevant to the manipulation by the driver.

In another embodiment, the first power device 200, the second power devices 202 and 204, and the third power device 400 are restrictively controlled through manipulation by the driver.

For example, the race car 100 may further include a button for indicating momentary acceleration. When the driver presses the button, the race car 100 may perform momentary acceleration by using at least one of the first power device 200, the second power devices 202 and 204, and the third power device 400.

The number of times by which the first power device 200, the second power devices 202 and 204, and the third power device 400 may be controlled according to manipulation by the driver may be limited to a specific reference value or less, and in detail, the number of times by which the first power device 200, the second power devices 202 and 204, and the third power device 400 may be controlled according to manipulation by the driver for one race may be limited to a specific reference value or less. That is, when gravity racing is performed by using the race car 100, the opportunities by which the driver operates the first power device 200, the second power devices 202 and 204, and the third power device 400 may be given as a specific number of times.

Meanwhile, the specific reference value may be increased or decreased according to a driving state of the driver. In another embodiment, the specific reference value is determined when the driver starts to drive the race car 100, and may be set not to increase during driving of the race car 100.

In an embodiment, the first power device 200 and the third power device 400 are controlled according to an external signal received, when the race car 100 satisfies a specific condition. For example, the specific condition may be at least one of a travel distance and a travel period of time of the race car 100 and a location of the race car 100.

In an embodiment, the race car 100 includes a steering wheel and a brake. The race car 100 includes a steering device configured to control a travel direction of the race car 100 as the driver manipulates the steering wheel. Further, the race car 100 includes a deceleration device configured to decrease a travel speed of the race car 100 as the driver manipulates the brake.

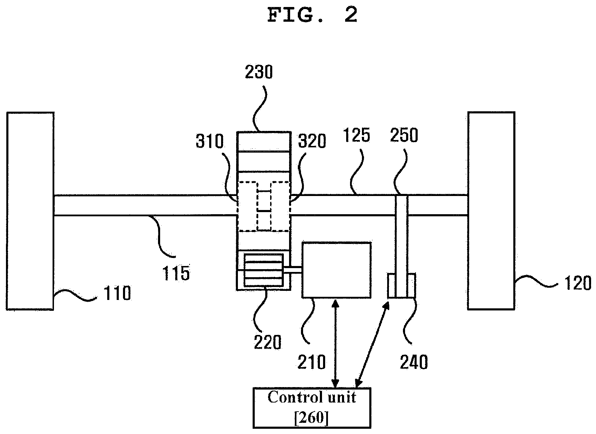

FIG. 2 is a view illustrating a first power device of a race car according to an example useful for understanding the invention.

In the first power device 200 illustrated in FIG. 2, only components related to embodiments are illustrated. Accordingly, it will be understood by an ordinary skilled in the art to which the inventive concept pertains that other general-purpose components may be further included in the first power device 200, in addition to the components illustrated in FIG. 2.

Referring to FIG. 2, the first power device 200 includes an electric motor 210 configured to supply power to the race car 100. Further, the first power device 200 includes a pinion gear 220 connected to the electric motor 210 and a spur gear 230 engaged with the pinion gear 220.

The race car 100 further includes two rotary shafts 115 and 125 connecting the centers of the two wheels 110 and 120 and the center of the spur gear 230. Further, the two one-way clutches 310 and 320 are installed between the center of the spur gear 230 and the two rotary shafts 115 and 125, respectively.

In an embodiment, the first power device 200 includes at least one encoder 240 for measuring an RPM of at least one of the two wheels 110 and 120. Further, the first power device 200 further includes a pulley 250 connecting the rotary shaft 125 of the wheel 120 and the encoder 240.

In an embodiment, the first power device 200 includes a control unit 260 configured to control the electric motor 210 based on the RPM of the wheel 120 measured by the encoder 240. For example, the control unit 260 calculates a speed of the vehicle 100 by using the diameter of the wheel 120 and the RPM of the wheel 120 measured by the encoder 240. In another embodiment, the control unit 260 measures the speed of the vehicle 100 by using a GPS device (not illustrated) or a sensor included in the race car 100.

Further, the control unit 260 controls the electric motor 210 to add an additional speed to the calculated or measured speed of the race car 100.

In detail, the control unit 260 calculates a torque for controlling the electric motor 210. When the weight of the race car 100 is m (kg) and the radius of the wheel 120 is r (m), a torque valve for giving an acceleration of a (m/s2) to the race car 100 is calculated by using Equation 1.

[Equation 1]

$$T = F * r = m * a * r$$

In equation 1, T denotes a torque (N*m) and F denotes a force (N).

Further, an output RPM n (rpm) that is inversely proportional to the torque is calculated by using Equation 2.

[Equation 2]

$$T = 9550 + P / n$$

In equation 2, T denotes a torque (N*m) and P denotes power (kW or N*m/s).

In an embodiment, a driving system for obtaining a desired torque value by adjusting a gear ratio for a fixed RPM.

In an embodiment, the control unit 260 delivers the calculated torque value from the first power device 200 to the wheels 110 and 120 in the form of a rotational force through gears, a chain or a belt. For example, the control unit 260 delivers the calculated torque value from the electric motor 210 to the wheels 110 and 120 in the form of a rotational force through a pinion gear 220 and a spur gear 230.

In another embodiment, the control unit 260 may convert the calculated torque value to a thrust through a propeller included in the third power device 400 and use the converted torque value to accelerate the race car 100.

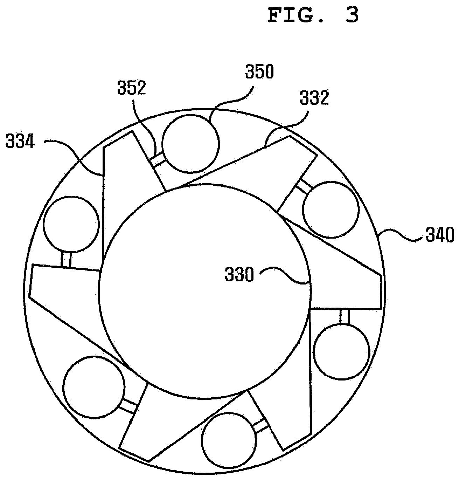

FIG. 3 is a view illustrating a one-way clutch according to an example useful for understanding the invention.

Each of the one-way clutches 310 and 320 includes an inner race 330 connected to the rotary shaft 115 and 125 and an outer race 340 connected to the spur gear 230, and includes at least one roller 350 installed between the inner race 330 and the outer race 340 to restrict the rotary shaft 115 and 125 such that the rotary shaft 115 and 125 may rotate only in a travel direction of the race car 100.

In an embodiment, the inner race 330 includes at least one protrusion 332 and 334 that generates friction between the outer race 340 and the roller 350. The roller 350 is connected to the protrusion 334 by using a connecting member 352. In an embodiment, the connecting member 352 includes a spring member.

The protrusion 332, the roller 350, and the outer race 340 allow the race car 100 to perform non-powered driving by using gravity and do not hamper a progress momentum of the race car 100 when the race car 100 moves forwards. However, when the race car 100 moves backwards while performing non-powered driving by using gravity, frictions are generated between any two of the protrusion 332, the roller 350, and the outer race 340 to restrict rotation of the rotary shaft 115 and 125.

For example, if the race car 100 performs non-powered driving by using gravity in the rightward direction of FIG. 3, the inner race 330 rotates in a clockwise direction. In this case, the protrusion 332, the roller 350, and the outer race 340 do not hamper a progress momentum of the race car 100.

However, if the race car 100 performs non-powered driving by using gravity in the leftward direction of FIG. 3, the inner race 330 rotates in a counterclockwise direction. In this case, a reaction occurs between the inner race 330 and the outer race 340 so that the roller 350 may contact an aperture between the protrusion 332 of the inner race 330 and the outer race 340, causing friction.

As another example, if the first power device 200 is driven, the outer race 340 rotates in a clockwise direction if the spur gear 230 rotates. In this case, the inner race 330 rotates in a clockwise direction like the outer race 340 while a reaction occurs between the inner race 330 and the outer race 340 so that the roller 350 may contact an aperture between the protrusion 332 of the inner race 330 and the outer race 340, causing friction.

Further, if the race car 100 performs non-powered driving by using gravity in the rightward direction of FIG. 3, the inner race 330 rotates in a clockwise direction. Then, if the first power device 200 is driven such that the outer race 340 is rotated at an angular speed that is equal to or higher than that of the inner race 330, the inner race 330 rotates in a clockwise direction like the outer race 340 while a reaction occurs between the inner race 330 and the outer race 340 so that the roller 350 contacts an aperture between the protrusion 332 of the inner race 330 and the outer race 340, causing friction.

By using the two one-way clutches 310 and 320, one first power device 200 may supply power to the two wheels 110 and 120 simultaneously when the race car 100 is momentarily accelerated. For example, the power of the electric motor 210 is supplied to the two wheels 110 and 120 simultaneously through the one way clutches 310 and 320 connected to the two wheels 110 and 120, respectively, via the pinion gear 220 and the spur gear 230.

Further, because the two wheels 110 and 120 are not connected to one shaft, the two wheels 110 and 120 may rotate at different speeds. For example, when the power is not supplied from the first power device 200, the one-way clutches 310 and 320 do not hamper a progress momentum of the race car 100. Accordingly, the two wheels 110 and 120 may rotate independently.

Accordingly, when the race car 100 turns, one side wheel may maintain a higher RPM than the opposite side wheel so that lowering of the speed of the race car 100 due to friction of a tire may be alleviated.

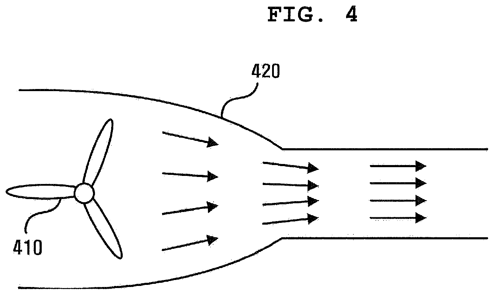

FIG. 4 is a view illustrating a third power device according to an example useful for understanding the invention.

Referring to FIG. 4, the third power device 400 includes a propeller or blade 410 and a ducted fan 420. In another embodiment, the third power device 400 may include a jet engine configured to generate a thrust by compressing and burning air.

In an embodiment, the race car 100 may include a propeller or blade 410 and a ducted fan 420 that may show an acceleration effect by using a thrust as the third power device 400.

When the propeller or blade 410 and the ducted fan 420 are used together, a thrust becomes stronger due to a pressure difference between a wide passage and a narrow passage according to the Venturi effect.

In an embodiment, a plurality of propellers or blades 410 are installed in parallel in the race car 100, a strong thrust may be obtained. In this case, the efficiency of the third power device 400 may be increased by analyzing a vortex generation point according to a travel of the race car 100 and disposing the propeller or blade 410.

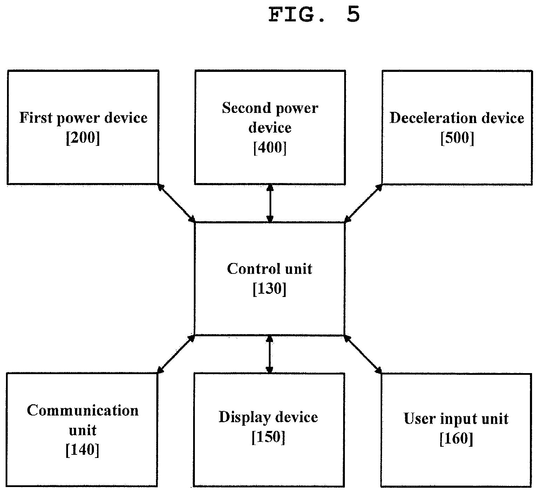

FIG. 5 is a block diagram illustrating a configuration of a race car according to an embodiment.

In the race car 100 illustrated in FIG. 5, only components related to embodiments are illustrated. Accordingly, it will be understood by an ordinary skilled in the art to which the inventive concept pertains that other general-purpose components may be further included in the race car 100, in addition to the components illustrated in FIG. 5.

Referring to FIG. 5, the race car 100 includes a control unit 130, a communication unit 140, and a first power device 200. The control unit 130 may include the control unit 260 illustrated in FIG. 2.

The communication unit 140 transmits travel information of the race car 100 to a server, and receives a control signal of the first power device 200 for momentary acceleration from the server when the travel information of the race car 100 satisfies a specific condition.

The control unit 130 controls the first power device 200 based on the control signal received by the communication unit 140. In an embodiment, the control signal is for controlling the first power device 200 such that the race car 100 travels at a preset speed for a preset period of time.

In an embodiment, the race car 100 includes a display device 150. The display device 150 displays an attainment rate of a specific condition. The communication unit 140 receives a control signal from the server when the attainment rate of the specific condition displayed on the display device 150 reaches a reference attainment rate.

In an embodiment, the specific condition is at least one of a travel distance of the race car 100 and a travel period of time of the race car 100. The display device 150 displays information on at least one of a current travel distance of the race car 100 and a current travel period of time of the race car 100. Further, the display device 150 displays information on at least one of a preset travel distance of the race car 100 and a preset travel period of time of the race car 100 to attain a specific condition.

In an embodiment, the control unit 130 performs momentary acceleration by controlling the first power device 200 immediately after the communication unit 140 receives a control signal from the server.

In another embodiment, the race car 100 includes a user input unit 160 for receiving a request for start of momentary acceleration from the driver. When receiving the request for start of momentary acceleration from the user input unit 160, the race car 100 performs momentary acceleration.

In an embodiment, the communication unit 140 requests approval of momentary acceleration from the server when receiving the request for start of momentary acceleration from the user input unit 160. The server identifies whether the race car 100 satisfied the specific condition, and transmits approval information for momentary acceleration. If the communication unit 140 receives approval information for momentary acceleration from the server the race car 100 performs momentary acceleration.

In another embodiment, the control unit 130 records the number of times by which the communication unit 140 receives control signals from the server. The display device 150 displays the number of times by which the race car 100 performs momentary acceleration. The number of times by which the race car 100 may perform momentary acceleration is a value that is obtained by subtracting the number of times by which the race car 100 performs momentary acceleration from the number of times by which the communication unit 140 receives control signals from the server. For example, the number of times by which the race car 100 may perform momentary acceleration is increased by one whenever the communication unit 140 receives a control signal from the server, and is decreased by one whenever the race car 100 performs momentary acceleration.

In an embodiment, the driver of the race car 100 may perform momentary acceleration by paying a specific sum instead of satisfying a specific condition. For example, the communication unit 140 requests approval of momentary acceleration from the server when receiving the request for start of momentary acceleration from the user input unit 160. The server identifies whether the race car 100 satisfies a specific condition. When the specific condition is not satisfied, the server requests payment for momentary acceleration. The communication unit 140 receives a request for payment for momentary acceleration from the server, and transmits approval information for the request for payment to the server. The communication unit 140 receives a control signal of the first power device 200 for momentary acceleration from the server, and the control unit 130 performs momentary acceleration by controlling the first power device 200.

In an embodiment, a spectator may present a momentary acceleration item to the race car 100. For example, if the spectator selects a race car 100, to which a momentary acceleration item will be presented, and pays a sum, the server may transmit a control signal of the power device 200 for momentary acceleration.

In an embodiment, the race car 100 is restricted such that momentary acceleration is allowed only in a linear course that does not have a corner within a specific distance. The race car 100 or the server may identify a configuration of a course located on the front side of the race car 100. When a corner is present within the specific distance, the race car 100 or the server may restrict momentary acceleration of the race car 100.

In an embodiment, the race car 100 includes a third power device 400. The third power device 400 includes at least one of a propeller, a blade, a jet engine, and a ducted fan for obtaining an additional acceleration during momentary acceleration. The communication unit 140 receives a control signal for controlling the third power device 400. The control unit 130 controls the third power device 400 based on the control signal received by the communication unit 140.

In an embodiment, the race car 100 includes a deceleration device 500 for decreasing a travel speed. In an embodiment, the deceleration device 500 includes a brake device configured to adjust a speed of the race car 100 by using friction. In another embodiment, the deceleration device 500 includes a parachute device configured to adjust a speed of the race car 100 by using resistance of air.

The communication device 140 receives a control signal for decelerating the race car 100 from the server. The control unit 130 controls the deceleration device 500 based on the control signal received by the communication unit 140. The control signal is for controlling the deceleration device 500 such that the race car travels at a preset speed or less for a preset period of time or less.

In an embodiment, the race car 100 includes a user input unit 160 that may request deceleration of another race car when a specific condition is satisfied. The communication unit 140 transmits a request for deceleration of a second race car to the server when receiving the request for deceleration of the second race car from the user input unit 160. The server transmits a control signal for deceleration to the communication unit of the race car corresponding to the received request for deceleration.

In an embodiment, when the race car 100 satisfies a specific condition, the communication unit 140 receives a control signal for deceleration of the race car 100. For example, when the race car 100 deviates from a specific course or there is a danger of a collision with an obstacle, the communication unit 140 may receive a control signal for deceleration of the race car 100 for safety. Further, even when the race car 100 performs momentary acceleration driving in a site at which there are many corners or obstacles, the communication unit 140 may receive a control signal for deceleration of the race car 100 for safety.

As another example, when the race car 100 speeds or violates a safety rule, the communication unit 140 may receive a control signal for deceleration of the race car 100 as a penalty to the race car 100.

In an embodiment, the first power device 200 is used to supply power that is necessary when the race car 100 starts. For example, when the race car 100 performs non-powered driving by using gravity at a corner including a downhill road, a long period of time may be taken until the race car 100 achieves a sufficient acceleration if an inclination of a starting point is low. If there is no inclination at the start point, the race car 100 cannot start with its own force. If the inclination of the start point is steep, it is difficult for the race car 100 to stop at the start point and an accident may occur.

Accordingly, the first power device 200 may be used in order that the race car 100 may obtain an initial acceleration that is necessary when the race car 100 starts or moves to a steep point.

In an embodiment, the user input unit 160 receives an input of the driver when the race car 100 starts to travel. The control unit 130 controls the first power device 200 based on the input of the driver received by the user input unit 160. For example, when the input of the driver is received by the user input unit 160 within a specific period of time from a time point with reference to the start, the control unit 130 performs momentary acceleration by controlling the first power device 200.

The steps of a method or an algorithm that have been described in relation to the embodiments of the inventive concept may be directly implemented by hardware, may be implemented by a software module executed by hardware, or may be implemented by a combination thereof. The storage unit 130 may reside in a random access memory (RAM), a read only memory (ROM), an erasable programmable ROM (EPROM), an electrically erasable programmable ROM (EEPROM), a flash memory, a hard disk, a detachable disk, or a computer readable recording medium in an arbitrary form, which is well known in the art to which the inventive concept pertains. In another embodiment, the software module may be stored in a cloud server.

According to the embodiments, in actually driving a race car, an interest for driving of a race car may be invoked by providing an immediate compensation, for example, in a racing game.

The race car according to an embodiment may save energy because it does not use power normally and uses power only when it performs momentary acceleration under the control of the server as it performs non-powered driving by using gravity. Further, the race car may safely travel under the control of the server.

According to an embodiment, the race car may be made lighter and more compact by replacing a differential gear.

The aspect of the inventive concept is not limited thereto, and other unmentioned aspects of the inventive concept may be clearly appreciated by those skilled in the art from the following descriptions.

Although the exemplary embodiments of the inventive concept have been described with reference to the accompanying drawings, it will be understood by those skilled in the art to which the inventive concept pertains that the inventive concept can be carried out in other detailed forms without changing the technical scope of the claims and essential features thereof. Therefore, the above-described embodiments are exemplary in all aspects, and should be construed not to be restrictive.

**Claims**

1. A system comprising:

   a race car (100) adapted to perform non-powered driving by using gravity and momentary acceleration by using a power unit; and
   a server,
   wherein the race car (100) comprises a first power device (200) configured to supply power to the race car (100) when the race car (100) is momentarily accelerated; two one-way clutches (310, 320) connected to the first power device (200); and two wheels (110, 120) connected to the two one-way clutches (310, 320), respectively,
   wherein the two wheels (110, 120) may rotate at different speeds and are supplied with power supplied from the first power device (200) through the one-way clutches (310, 320) connected to the two wheels (110, 120), respectively, when the race car (100) is momentarily accelerated, and
   where the race car (100) further comprises:

      a communication unit (140) configured to transmit driving information of the race car (100) to the server, and receives a control signal of the first power device (200) for momentary acceleration from the server when the driving information of the race car (100) satisfies a specific condition; and
      a control unit (260) configured to control the first power device (200) based on the control signal received by the communication unit (140),

wherein the control signal is configured to control the first power device (200) such that the race car (100) travels at a preset speed for a preset period of time,

wherein the specific condition is at least one of a travel distance and a travel period of time of the race car (100) and a location of the race car (100), and

wherein the racing car (100) is adapted to perform momentary acceleration under the control of the server, and

wherein the server is adapted to communicate with another racing car.

2. The system of claim 1, wherein the first power device (200) includes:

an electric motor (210) configured to supply power;
a pinion gear (220) connected to the electric motor (210); and
a spur gear (230) engaged with the pinion gear (220),
the race car (100) further comprises two rotary shafts (115, 125) connecting the centers of the two wheels (110, 120) and the center of the spur gear (230), and
wherein the two one-way clutches (310, 320) are installed between the center of the spur gear (230) and the two rotary shafts (115, 125), respectively.

3. The system of claim 2, wherein each of the two one-way clutches (310, 320) includes:

an inner race (330) connected to the corresponding rotary shaft;
an outer race (340) connected to the spur gear (230); and
at least one roller (350) installed between the inner race (330) and the outer race (340) and configured to restrict the rotary shaft such that the rotary shaft rotates only in a progress direction of the race car (100), and
wherein friction due to the roller (350) occurs between the outer race (340) and the inner race (330) so that the inner race (330) rotates at a speed that is the same as that of the outer race (340) when the electric motor (210) is driven such that the outer race (340) rotates at a speed that is the same as or higher than that of the inner race (330) in a rotational direction that is the same as that of the inner race (330).

4. The system of claim 2, wherein the first power device (200) includes:

at least one encoder (240) configured to measure an RPM of at least one of the two wheels (110, 120); and
a control unit (260) configured to control the electric motor (210), and
wherein the control unit (260) calculates a speed of the race car (100) by using the diameters of the two wheels (110, 120) and the RPM measured by the encoder (240), and controls the electric motor (210) such that an additional speed is added to the calculated speed when the race car (100) is momentarily accelerated.

5. The system of claim 1, further comprising:
at least one of a propeller, a blade, a jet engine, and a ducted fan for obtaining an additional acceleration when the race car (100) is momentarily accelerated.

6. The system of claim 1, further comprising:

two second power devices (202, 204) connected to the two wheels (110, 120), respectively,
wherein the two second power devices (202, 204) supply different power to the two wheels (110, 120), respectively, when the race car (100) is momentarily accelerated.

7. The system of claim 1, further comprising:

a button configured to indicate performance of the momentary acceleration; and
a control unit (260) configured to perform the momentary acceleration by controlling the first power device (200) if receiving an input of the button.

8. The system of claim 6, wherein the number of time, by which the momentary acceleration is performed, is restricted to a specific reference value or less by using the input of the button.

**Patentansprüche**

1. System umfassend:

einen Rennwagen (100), der daran angepasst ist, ein nicht angetriebenes Fahren durch Verwenden von Schwerkraft und Momentanbeschleunigung durch Verwenden einer Leistungseinheit durchzuführen; und
einen Server,
wobei der Rennwagen (100) eine erste Leistungsvorrichtung (200), die dazu konfiguriert ist, dem Rennwagen (100) Leistung zuzuführen, wenn der Rennwagen (100) momentan beschleunigt wird; zwei Einwegkupplungen (310, 320), die mit der ersten Leistungsvorrichtung (200) verbunden sind; und zwei Räder (110, 120) umfasst, die jeweils mit den zwei Einwegkupplungen (310, 320) verbunden sind,

wobei die zwei Räder (110, 120) sich mit verschiedenen Geschwindigkeiten drehen können und mit Leistung versorgt werden, die von der ersten Leistungsvorrichtung (200) durch die jeweils mit den zwei Rädern (110, 120) verbundenen Einwegkupplungen (310, 320) zugeführt wird, wenn der Rennwagen (100) momentan beschleunigt wird, und

wobei der Rennwagen (100) ferner umfasst:

eine Kommunikationseinheit (140), die dazu konfiguriert ist, eine Fahrinformation des Rennwagens (100) zu dem Server zu übertragen, und ein Steuersignal der ersten Leistungsvorrichtung (200) für eine Momentanbeschleunigung von dem Server empfängt, wenn die Fahrinformation des Rennwagens (100) eine spezifische Bedingung erfüllt; und

eine Steuereinheit (260), die dazu konfiguriert ist, die erste Leistungsvorrichtung (200) basierend auf dem durch die Kommunikationseinheit (140) empfangenen Steuersignal zu steuern,

wobei das Steuersignal dazu konfiguriert ist, die erste Leistungsvorrichtung (200) derart zu steuern, dass sich der Rennwagen (100) für einen voreingestellten Zeitraum mit einer voreingestellten Geschwindigkeit bewegt,

wobei die spezifische Bedingung wenigstens eine einer Fahrtstrecke und eines Fahrtzeitraums des Rennwagen (100) und eines Orts des Rennwagens (100) ist, und

wobei der Rennwagen (100) daran angepasst ist, eine Momentanbeschleunigung unter der Steuerung des Servers durchzuführen, und

wobei der Server daran angepasst ist, mit einem anderen Rennwagen (100) zu kommunizieren.

2. System nach Anspruch 1, wobei die erste Leistungsvorrichtung (200) umfasst:

einen Elektromotor (210), der dazu konfiguriert ist, Leistung zuzuführen;

ein Ritzelgetriebe (220), das mit dem Elektromotor (210) verbunden ist; und

ein Stirnradgetriebe (230), das mit dem Ritzelgetriebe (220) in Eingriff ist,

wobei der Rennwagen (100) ferner zwei Drehwellen (115, 125) umfasst, die die Zentren der zwei Räder (110, 120) und das Zentrum des Stirnradgetriebes (230) verbinden, und

wobei die zwei Einwegkupplungen (310, 320) jeweils zwischen dem Zentrum des Stirnradgetriebes (230) und den zwei Drehwellen (115, 125) installiert sind.

3. System nach Anspruch 2, wobei jede der zwei Einwegkupplungen (310, 320) umfasst:

einen Innenlaufring (330), der mit der entsprechenden Drehwelle verbunden ist;

einen Außenlaufring (340), der mit dem Stirnradgetriebe (230) verbunden ist; und

wenigstens eine Rolle (350), die zwischen dem Innenlaufring (330) und dem Außenlaufring (340) installiert und dazu konfiguriert ist, die Drehwelle derart einzuschränken, dass sich die Drehwelle nur in einer Fortschreitrichtung des Rennwagens (100) dreht, und

wobei aufgrund der Rolle (350) Reibung zwischen dem Außenlaufring (340) und dem Innenlaufring (330) auftritt, so dass der Innenlaufring (330) sich mit einer Geschwindigkeit dreht, die die gleiche wie jene des Außenlaufrings (340) ist, wenn der Elektromotor (210) derart angetrieben wird, dass der Außenlaufring (340) sich mit einer Geschwindigkeit dreht, die in einer Drehrichtung, die die gleiche wie jene des Innenlaufrings (330) ist, die gleiche wie oder höher als jene des Innenlaufrings (330) ist.

4. System nach Anspruch 2, wobei die erste Leistungsvorrichtung (200) umfasst:

wenigstens einen Encoder (240), der dazu konfiguriert ist, eine Drehzahl (*RPM*) von wenigstens einem der zwei Räder (110, 120) zu messen; und

eine Steuereinheit (260), die dazu konfiguriert ist, den Elektromotor (210) zu steuern, und

wobei die Steuereinheit (260) eine Geschwindigkeit des Rennwagens (100) durch Verwenden der Durchmesser der zwei Räder (110, 120) und der durch den Encoder (240) gemessenen Drehzahl (*RPM*) berechnet, und den Elektromotor (210) derart steuert, dass eine zusätzliche Geschwindigkeit zu der berechneten Geschwindigkeit hinzugefügt wird, wenn der Rennwagen (100) momentan beschleunigt wird.

5. System nach Anspruch 1, ferner umfassend:
wenigstens einen Propeller, ein Blatt, ein Düsentriebwerk und/oder einen Mantelpropeller zum Erhalten einer zusätzlichen Beschleunigung, wenn der Rennwagen (100) momentan beschleunigt wird.

6. System nach Anspruch 1, ferner umfassend:

zwei zweite Leistungsvorrichtungen (202, 204), die mit den zwei Rädern (110, 120) jeweils verbunden sind,

wobei die zwei zweiten Leistungsvorrichtungen (202, 204) den zwei Rädern (110, 120) jeweils eine unterschiedliche Leistung zuführen, wenn der Rennwagen (100) momentan beschleunigt wird

7.  System nach Anspruch 1, ferner umfassend:

eine Taste, die dazu konfiguriert ist, eine Performance der Momentanbeschleunigung anzuzeigen; und
eine Steuereinheit (260), die dazu konfiguriert ist, die Momentanbeschleunigung durch Steuern der ersten Leistungsvorrichtung (200) durchzuführen, wenn sie eine Eingabe der Taste empfängt.

8.  System nach Anspruch 6, wobei die Anzahl von Malen, mit denen die Momentanbeschleunigung durchgeführt wird, durch Verwenden der Eingabe der Taste auf einen spezifischen Referenzwert oder weniger eingeschränkt wird.

**Revendications**

1.  Système comprenant :

une voiture de course (100) adaptée à réaliser une conduite non-motorisée utilisant la gravité et une accélération momentanée utilisant une unité motrice et
un serveur,
où la voiture de course (100) comprend un premier dispositif de motorisation (200) configuré pour fournir de l'énergie à la voiture de course (100) quand la voiture de course (100) est momentanément accélérée, deux roues libres (310, 320) connectées au premier dispositif de motorisation (200) et deux roues (110, 120) connectées aux deux roues libres (310, 320), respectivement,
où les deux roues (110, 120) peuvent tourner à différentes vitesses et sont alimentées en énergie fournie par le premier dispositif de motorisation (200) par l'intermédiaire des roues libres (310, 320) connectées aux deux roues (110, 120), respectivement, quand la voiture de course (100) est momentanément accélérée et
où la voiture de course (100) comprend en outre :

une unité de communication (140) configurée pour transmettre l'information de conduite de la voiture de course (100) au serveur, et recevoir un signal de contrôle du premier dispositif de motorisation (200) pour l'accélération momentanée depuis le serveur quand l'information de conduite de la voiture de course (100) satisfait une condition spécifique et
une unité de commande (260) configurée pour commander le premier dispositif de motorisation (200) sur la base du signal de commande reçu par l'unité de communication (140),

où le signal de commande est configuré pour commander le premier dispositif de motorisation (200) de telle manière que la voiture de course (100) se déplace à une vitesse préréglée pour une période de temps préréglée,
où la condition spécifique est au moins une parmi une distance de déplacement, une période de temps de déplacement de la voiture de course (100) et une localisation de la voiture de course (100) et
où la voiture de course (100) est adaptée à réaliser une accélération momentanée sous le contrôle du serveur et
où le serveur est adapté à communiquer avec une autre voiture de course.

2.  Système selon la revendication 1, **caractérisé en ce que** le premier dispositif de motorisation (200) inclut :

un moteur électrique (210) configuré pour fournir de l'énergie,
un engrenage à pignons (220) connecté au moteur électrique (210) et
un engrenage cylindrique (220) engagé avec l'engrenage à pignons (220),
la voiture de course (100) comprend en outre deux arbres rotatifs (115, 125) connectant les centres des deux roues (110, 120) et le centre de l'engrenage cylindrique (230) et
où les deux roues libres (310, 320) sont installées entre le centre de l'engrenage cylindrique (230) et les deux arbres rotatifs (115, 125), respectivement.

3.  Système selon la revendication 2, **caractérisé en ce que** chacune des deux roues libres (310, 320) inclut :

une cage intérieure (330) connectée à l'arbre rotatif correspondant,
une cage externe (340) connectée à l'engrenage cylindrique (230) et
Au moins un galet (350) installé entre la cage intérieure (330) et la cage extérieure (340) et configuré pour restreindre l'arbre rotatif de telle manière que l'arbre rotatif pivote seulement dans une direction d'avancée de la voiture de course (100) et

où la friction due au galet (350) a lieu entre la cage extérieure (340) et la cage intérieure (330) de telle manière que la cage intérieure (330) pivote à une vitesse qui est la même que celle de la cage extérieure (340) quand le moteur électrique (210) est entraîné de telle manière que la cage extérieure (340) tourne à une vitesse qui est la même ou supérieure à celle de la cage intérieure (330) dans une direction rotationnelle qui est la même que celle de la cage intérieure (330).

4. Système selon la revendication 2, **caractérisée en ce que** le premier dispositif de motorisation (200) inclut :

au moins un encodeur (240) configuré pour mesurer un RPM d'au moins une des deux roues (110, 120) et

une unité de commande (260) configurée pour commander le moteur électrique (210) et

**en ce que** l'unité de commande (260) calcule une vitesse de la voiture de course (100) en utilisant les diamètres des deux roues (110, 120) et le RPM mesuré par l'encodeur (240) et contrôle le moteur électrique (210) de telle manière qu'une vitesse supplémentaire est ajoutée à la vitesse calculée quand la voiture de course (100) est momentanément accélérée.

5. Système selon la revendication 1, comprenant en outre :
au moins un élément parmi un propulseur, une aube, un moteur à réaction et une soufflante carénée pour obtenir une accélération supplémentaire quand une voiture de course (100) est momentanément accélérée.

6. Système selon la revendication 1, comprenant en outre :

deux deuxièmes dispositifs de motorisation (202, 204) connectés aux deux roues (110, 120), respectivement,

où les deux deuxièmes dispositifs de motorisation (202, 204) fournissent différentes énergies aux deux roues (110, 120), respectivement, quand la voiture de course (100) est momentanément accélérée.

7. Système selon la revendication 1, comprenant en outre :

un bouton configuré pour indiquer la performance de l'accélération momentanée et

une unité de commande (260) configurée pour réaliser l'accélération momentanée en contrôlant le premier dispositif de motorisation (200) en cas de réception d'une entrée du bouton.

8. Système selon la revendication 6, **caractérisé en ce que** le nombre de fois où l'accélération momentanée est réalisée est restreint à une valeur de référence spécifique ou moins en utilisant l'entrée du bouton.

FIG. 1

# FIG. 2

FIG. 3

FIG. 4

# FIG. 5

| First power device [200] | Second power device [400] | Deceleration device [500] |
|---|---|---|

Control unit [130]

| Communication unit [140] | Display device [150] | User input unit [160] |
|---|---|---|

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010018786 A

**Non-patent literature cited in the description**

- The value of a clutch mechanism in electric vehicles. **CAMILLERI R et al.** 2013 WORLD ELECTRIC VEHICLE SYMPOSIUM AND EXHIBITION (EVS27). IEEE, 17 November 2013
- **ESPELAND ASLAK BRAGE et al.** *Development and Construction of Vehicle for Participation in the Shell Eco-marathon Competition,* 08 November 2012, 283-287, https://pdfs.semanticscholar.org/bdd2/42ef86d84b548429f267416c9a8a407156a4.pdf

- GPRS telemetry system for high-efficiency electric competition vehicles. **CALDERON ALFONSO GAGO et al.** 2013 WORLD ELECTRIC VEHICLE SYMPOSIUM AND D4 EXHIBITION (EVS27). IEEE, 17 November 2013, vol. 5, 1-7